# EUROPEAN PATENT SPECIFICATION

(11) **EP 3 662 739 B1**
(45) Date of publication and mention of the grant of the patent: **07.10.2026**
(21) Application number: 19210718.3
(22) Date of filing: 21.11.2019
(51) Int. Cl.: A01D 57/02

(54) **CROP HARVESTING REEL WITH AN END SHIELD PLATE AND FINGERS FOR GUIDING CROP**
HASPEL ZUM ERNTEN VON ERNTEGUT MIT EINER ENDABSCHIRMUNGSPLATTE UND FINGERN ZUM FÜHREN VON ERNTEGUT
BOBINE DE RÉCOLTE DE CULTURE DOTÉE D'UNE PLAQUE PROTECTION D'EXTRÉMITÉ ET DE DOIGTS POUR LE GUIDAGE DES CULTURES

(30) Priority: 06.12.2018 CA 3026664
(43) Date of publication of application: 10.06.2020
(73) Proprietor: MacDon Industries Ltd., Winnipeg Manitoba R3J 3S3 (CA)
(72) Inventor: Remillard, Rheal, St Joseph, Manitoba ROG 2C0 (CA)
(74) Representative: Jostarndt Patentanwalts-AG

(56) References cited:
- CA-A1- 2 876 686
- US-A- 3 512 348
- US-A1- 2018 242 525
- US-B1- 6 442 918

## Description

This invention relates to a crop harvesting heard including reel with an end plate and fingers for guiding crop over a cutter bar to crop collection.

### BACKGROUND OFTHE INVENTION

In US Patent Application 2018/242525A1 (Schwinn) A split reel assembly for a header of a combine harvester is provided which has two reel assemblies driven by a central support assembly. A pivotable reel finger assembly is incorporated into a medial end of each reel assembly to deflect crop material away from the central support assembly.

In US Patent 6,591,598 (Remillard) assigned to the present Applicants is disclosed a crop harvesting header including a cutter bar and a reel for Controlling movement of the crop in the area over the cutter bar. The reel is rotatable about an axis generally parallel to the cutter bar and has a plurality of reel bats each having reel fingers projecting generally radially outwardly from the reel axis. The reel bats are pivotal each about a respective bat axis parallel to the reel axis so as to vary the angle of the fingers about the bat axis as the reel rotates. The reel co-operates with a cam carried on the reel arms in generally stationary Position so that each bat has a crank arm with a cam follower on the crank arm which follows the cam as the reel rotates relative to the cam and causes the required pivotal movement of the bat.

The reel bats are carried in bearings mounted on reel support plates at spaced positions along the reel.

The number of bats can vary but in many arrangement there are six such bats arranged at angularly spaced positions around the reel axis. The above patent discloses the cam arrangement which is located at one end of the reel for Controlling the movement of the bats around their individual bat axes and the finger pattern thus obtained. The cam can be adjusted to change the angular Position of the finger pattern around the axis. The cam is arranged at one end of the reel and the cam is smaller than the bat circle to that bats can project past the cam to provide end fingers which are at least aligned with the cam.

At the end of the reel is typically provided an end shield plate just beyond the cam which acts to contact the crop to hold it on the bats of the reel and reduces tendency of the crop to exit over the end of the reel. The end plate also acts to reduce the tendency of the crop to wrap around the reel. The end plate is thus in effect the end most component of the reel at the adjacent reel support arm on which the support shaft of the reel is mounted. In arrangements used up to date, the end plate has an outer perimeter edge which is either circular so as to surround the outer periphery of the tine tubes, or is polygonal with apexes at the tine tubes (typically 5 or 6) and with Straight portions joining the apexes.

Each tine tube carries endmost fingers which typically lie in a radial plane of the reel axis so that they are positioned inside the endplate and spaced axially from the radial plane containing the end plate.

### SUMMARY OF THE INVENTION

According to the invention there is provided a crop harvesting header comprising:
a header frame structure arranged for movement in a direction of working movement across ground carrying a crop to be harvested;
a cutter bar arranged across a forward edge of the header frame structure for cutting the crop;
a cut crop transport arrangement mounted on the header frame structure for receiving and transporting the cut crop for further Processing;
and a reel for Controlling movement of the crop in the area over the cutter bar; the reel being mounted on the header frame structure for movement therewith in the direction of movement and for rotation about a reel axis generally parallel to the cutter bar;
the reel having a plurality of reel bats at spaced positions around the reel axis, the reel bats all lying on a common bat circle around the reel axis so that rotation of the reel causes the reel bats to follow a path of movement lying on the bat circle;
each of the reel bats being pivotal by a drive linkage about its respective bat axis parallel to the reel axis so as to vary the angle of the bats about the bat axis as the reel rotates;
each reel bat having a row of bat fingers projecting generally outwardly from the bat axis with the bat fingers of the row being arranged at longitudinally spaced positions along the bat axis and including an end most finger adjacent an end of the reel;
an end shield plate mounted on the reel at the end of the reel for rotation with the bats around the reel axis and lying generally in a radial plane of the axis of the reel;
the end shield plate having a peripheral edge located radial ly inward of an outer tip of the bat fingers;
each of the endmost fingers of the bats having a base at the bat which is axially inside the end shield plate;
and each of the endmost fingers is shaped to define an outer tip which is axially spaced from the base to a Position at least axially aligned with the radial plane of the end shield plate.

Preferably each of the endmost fingers is shaped to define an outer tip which is axially spaced from the base to a position beyond the radial plane of the end shield plate.

Thus the fingers at the end of the reel extend to a position at least aligned with the end shield plate which improves crop flow at this end and reduces the possibility of crop stalling or wrapping at this location. This can also reduce the possibility for crop material to collect between the end of the reel and the conventional header end panel.

In order for the tip to reach this location, preferably each of the endmost fingers is bent in a direction longitudinally of the axis that is out of the radial plane of the base of the finger at which it is connected to the tine tube or bat. The finger may also be bend from a line radial to the tine tube in conventional manner.

Typically the end fingers each can be formed from a metal rod or wire so that they can be readily bent to take up the required angles whereas other fingers of the bats other than the endmost fingers are formed of plastics material in conventional manner and lie in a radial plane of the bat axis. However the end fingers may be molded plastic shaped to provide the required bend so that all fingers may be plastic, all may be metal or there may be a mixture of both metal and plastic.

The end plate may or may not lie wholly in a radial plane of the reel axis. The end plate can be open at a center part which may be located only at the

According to the invention the peripheral edge of the end shield plate has an apex at each of the bats. In order to allow the required movement of the endmost fingers around the bat axis, the peripheral edge at each of the bats includes portions which are recessed from a Straight line joining the apexes and this recessed portion acts to allow rotation of the endmost finger around the bat axis without contacting the peripheral edge.

Preferably the peripheral edge of the end shield plate has a portion adjacent the apex which is substantially part circular around the bat axis since this allows the free movement of the finger as it rotates around this axis.

In addition to the movement of the finger, a scalloped shape of the peripheral edge of the end shield plate provides discontinuities in the edge which help move the crop rearwardly as the reel rotates. These discontinuities can be formed by the recesses which are recessed by a sharper angle on the downstream side of the apex than on the upstream side of the apex relative to the direction of rotation of the reel.

In particular, preferably the peripheral edge is shaped so that a deepest recess of the peripheral edge is closer to an upstream apex than a downstream apex to form a scalloped shape.

That is preferably the peripheral edge of the end shield plate has a portion adjacent the apex which is substantially part circular around the bat axis and remains substantially circular up to a position close to a deepest recess of the peripheral edge.

Typically the drive linkage comprises a cam member mounted at one end of the reel, each bat having associated therewith a respective control link, such that, as the reel rotates through a series of angularly spaced positions of the bats, the movement of the control link defined by the cam member causes said pivotal movement of the respective bat about the bat axis. In this arrangement preferably the endmost finger has a base thereof which is located between the cam member and the end shield plate.

Preferably also there is provided an end sheet lying in a vertical plane at right angles to the cutter bar so as to lie along the direction of working movement where the end sheet is substantially immediately adjacent the end shield plate. The Provision of the fingers which extend beyond the end shield plate assist in preventing collection of material between the end shield and the end sheet.

According to a second aspect of the invention there is provided a crop harvesting header comprising:
a header frame structure arranged for movement in a direction of working movement across ground carrying a crop to be harvested;
a cutter bar arranged across a forward edge of the header frame structure for cutting the crop;
a cut crop transport arrangement mounted on the header frame structure for receiving and transporting the cut crop for further processing;
and a reel for controlling movement of the crop in the area over the cutter bar; the reel being mounted on the header frame structure for movement therewith in the direction of movement and for rotation about a reel axis generally parallel to the cutter bar;
the reel having a plurality of reel bats at spaced positions around the reel axis, the reel bats all lying on a common bat circle around the reel axis so that rotation of the reel causes the reel bats to follow a path of movement lying on the bat circle;
each of the reel bats being pivotal by a drive linkage about its respective bat axis parallel to the reel axis so as to vary the angle of the fingers about the bat axis as the reel rotates;
each reel bat having a row of bat fingers projecting generally outwardly from the bat axis with the bat fingers of the row being arranged at longitudinally spaced positions along the bat axis;
an end shield plate mounted on the reel at the end of the reel for rotation with the bats around the reel axis and lying generally in a radial plane of the axis of the reel;
the end shield plate having a peripheral edge located radially inward of an outer tip of the bat fingers;
wherein the peripheral edge of the end shield plate has an apex at each of the bats and the peripheral edge at each of the bats includes portions which are recessed from a straight line joining the apexes.

Preferably the peripheral edge of the end shield plate has a portion adjacent the apex which is substantially part circular around the bat axis.

Preferably the peripheral edge of the end shield plate is recessed by a sharper angle on the downstream side of the apex than on the upstream side of the apex relative to the direction of rotation of the reel.

Preferably the peripheral edge is shaped so that a deepest recess of the peripheral edge is closer to an upstream apex than a downstream apex to form a scalloped shape.

Preferably the scalloped shape forms discontinuities in the peripheral edge of the end shield plate which help in causing the crop to move rearwardly with the reel.

Preferably the peripheral edge of the end shield plate has a portion adjacent the apex which is substantially part circular around the bat axis and remains substantially circular up to a Position close to a deepest recess of the peripheral edge.

### BRIEF DESCRIPTION OFTHE DRAWINGS

The invention will be described in conjunction with the accompanying drawings in which:
Figure 1 is a schematic view of a header according to the present invention looking along the header toward one end and showing the reel, reel support arms, tine tubes, table, header frame, frame end sheet, cam and control linkages, with the end mounting disks of the reel omitted for convenience of Illustration.

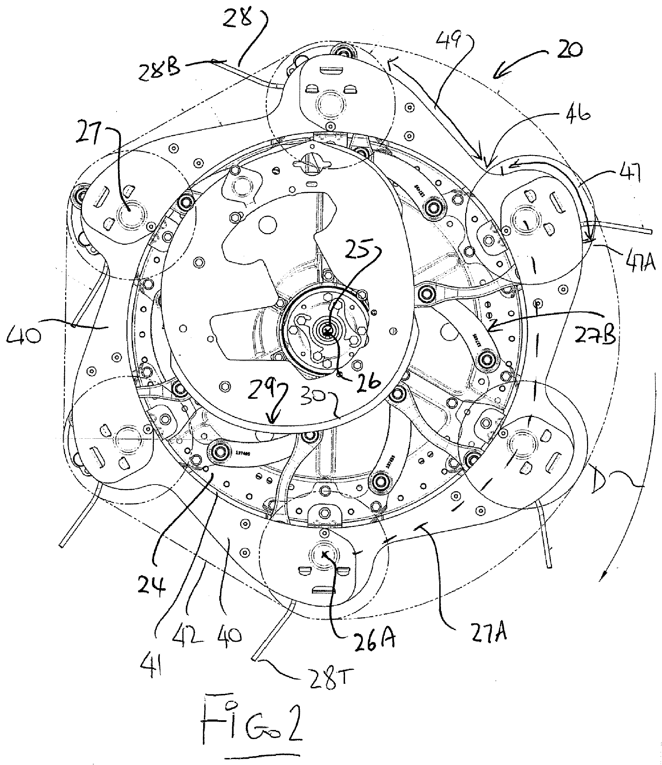

Figure 2 is a transverse cross-sectional view of the reel only of Figure 1.
Figure 3 is a longitudinal cross-sectional view of the reel only of Figure 1.

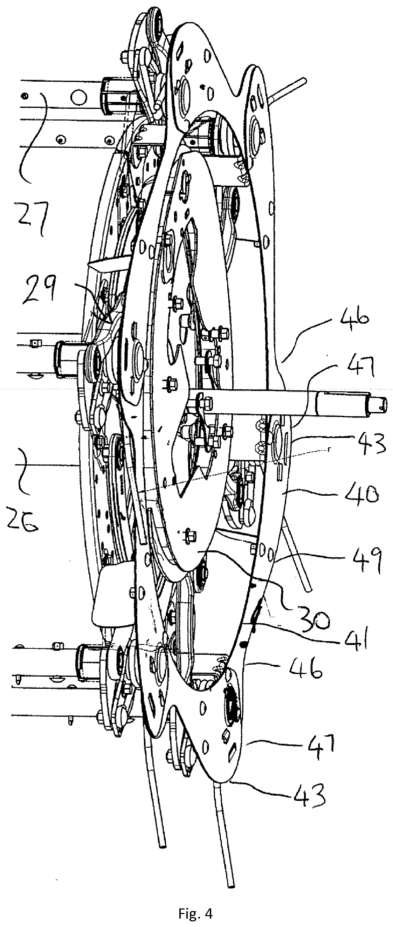

Figure 4 is an isometric view of the reel only of Figure 1 showing only the end of the reel including the finger control cam.
Figure is a transverse cross-sectional view of the reel only of Figure 1.
Figure 5 is a transverse cross-sectional view similar to Figure 2 which is simplified to show the shape of the end shield plate.

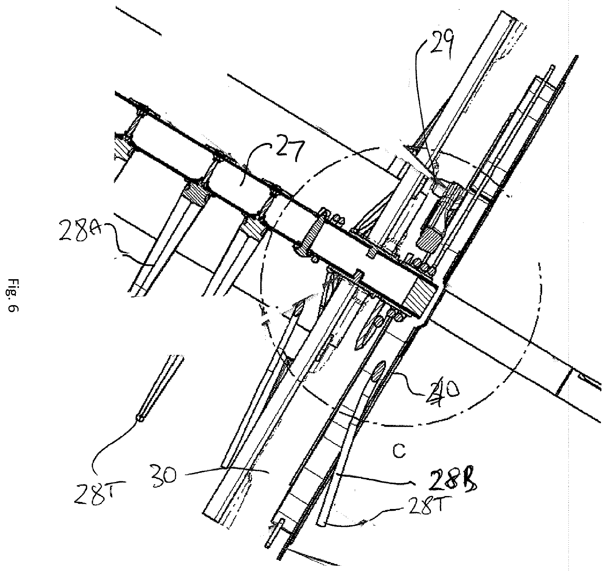

Figure 6 is a longitudinal cross-sectional view of one tine tube which is simplified to show the shape of the endmost fingers.
Figure 7 is an isometric view of the reel only of Figure 1 showing only the end opposite the finger control cam.

### DETAILED DESCRIPTION

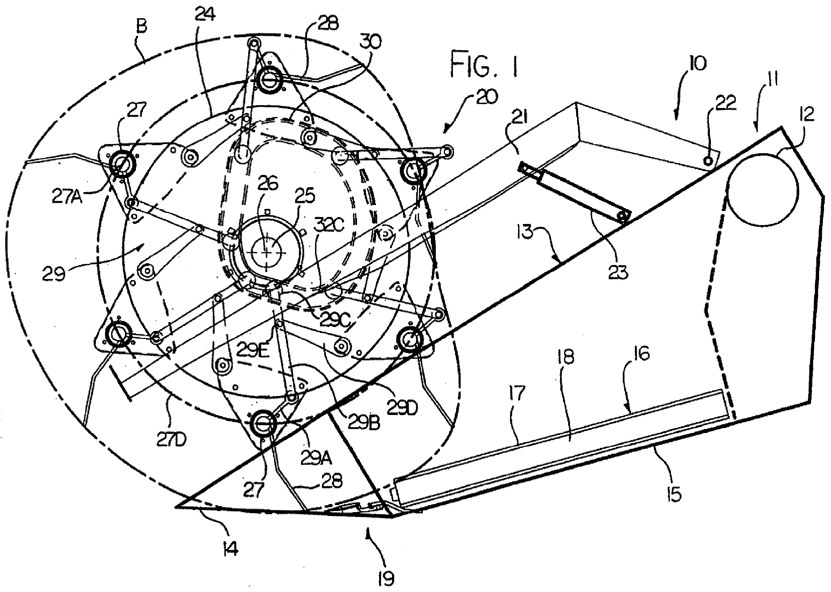

In Figure 1 is shown an embodiment of a header according to the present invention with a number of the elements being shown schematically since the general construction of such headers is well known to one skilled in the art. The header 10 includes a header frame 11 having a main frame tube 12 extending across the width of the header between two end frames one of which is shown at 13 and the other of which is of course at the other end and therefore not visible in the elevation of Figure 1. The main tube 12 is suitably supported and attached on a propulsion vehicle in a manner so that the header frame can be moved forwardly across the ground in cutting a standing crop. The end frame 13 extends forwardly from the main tube 12 to a forward nose section 14. The main tube 12 carries a plurality of frame bars which extend downwardly and forwardly for supporting a table 15 of the header onto which crop material is deposited after cutting. The structural elements defining the frame bars on the table are not shown for convenience of illustration since again these are well known to one skilled in the art and can vary in accordance with engineering considerations.

On the table 15 is provided a crop conveyor 16 which is arranged to transport the crop after cutting across the width of a header to a discharge location. In the embodiment shown the conveyor is provided as a draper canvas 17 mounted on rollers 18. Other embodiments can use alternative crop transportation systems and primarily an auger which is commonly used as an alternative for the draper system. The embodiments of the present invention are not limited to either of the different types of header.

At the front of the table 15 is provided a cutter bar generally indicated at 19 which is again only shown schematically since the construction of this is well known to one skilled in the art. The cutter bar shown provides a sickle knife in guards which reciprocates back and forth in a cutting action on the standing crop so that the crop is deposited on the draper for transportation to the discharge location.

When used on a combine harvester the discharge location is associated with a crop transfer system which transfers the crop rearwardly into the feeder house of the combine. Headers of this type can of course also be used as a swather where the discharge location simply discharges the crop onto the ground in a swath or through a crop conditioner onto the ground.

The header further includes a reel generally indicated at 20. The reel 20 includes mounting arms 21 pivoted on a suitable mounting 22 adjacent the tube 12 so that the arms project forwardly from the frame to a position over the end frame elements 13 so as to provide support for the reel extending the header above the cutter bar. Each arm is movable in its pivotal action by a suitable drive actuator 23.

The reel further includes end support discs, one of which is shown only schematically in Figure 1 as a circle at the end of the reel but it will be appreciated that the structural arrangement of the disc can vary in accordance with engineering requirements. The end disc is indicated at 24 and is mounted on a shaft 25 which supports the disc for rotation about an axis 26 of the reel.

The disc supports a plurality of reel bats 27 at angularly spaced positions around the axis 26. Each reel bat carries a plurality of longitudinally spaced fingers 28 which project outwardly from the bar for engaging the crop Each reel bat is pivotal about its own individual axis 26A parallel to the axis 26 so as to change the angular position of the fingers around the axis 26A of the bat. The angular position of the bat about its axis is controlled by a linkage 29 of the bat which cooperates with a cam 30 of the reel so that as the bats rotate the linkage moves the bats to the required angular position in dependence upon the co-operation of the linkage with the cam.

Arrangements of this general type are well known and conventional as discussed in the prior art US Patent 6,591,598 (Remillard), the disclosure of which may be referenced for further details not shown herein. The following description relates to the modifications and improvements set forth in the present application and refers to the details shown in Figure 1 and the further drawings.

The reel 20 thus has a plurality of reel bats 27 at spaced positions around the reel axis, the reel bats all lying on a common bat circle 27A around the reel axis 26 so that rotation of the reel causes the reel bats 27 to follow a path of movement lying on the bat circle 27A. Each of the reel bats is driven in pivotal movement by a drive linkage 29 including the cam 30 around its respective bat axis parallel to the reel axis so as to vary the angle of the fingers about the bat axis as the reel rotates. One example of this arrangement is described in detail in the above referenced patent. Also as described, each reel bat has a row of bat fingers 28 projecting generally outwardly from the bat axis with the bat fingers of the row being arranged at longitudinally spaced positions along the bat axis and including a main set of fingers 28A and an end most finger 28B adjacent an end of the reel. An end shield plate 40 is mounted on the reel at the end of the reel for rotation with the bats around the reel axis and lying generally in a radial plane of the axis of the reel. The end shield plate 40 is generally planar in the radial plane and includes an inner edge 41 and an outer peripheral edge 42. The inner edge 41 is generally circular and is suitably located to accommodate components internal thereto. The outer peripheral edge 42 is located generally radially inward of an outer tip 28T of the bat fingers so that the tip and a portion of the finger adjacent the tip is exposed beyond the peripheral edge 42 around the full periphery of the plate and as the fingers rotate back and forth around the bat axis.

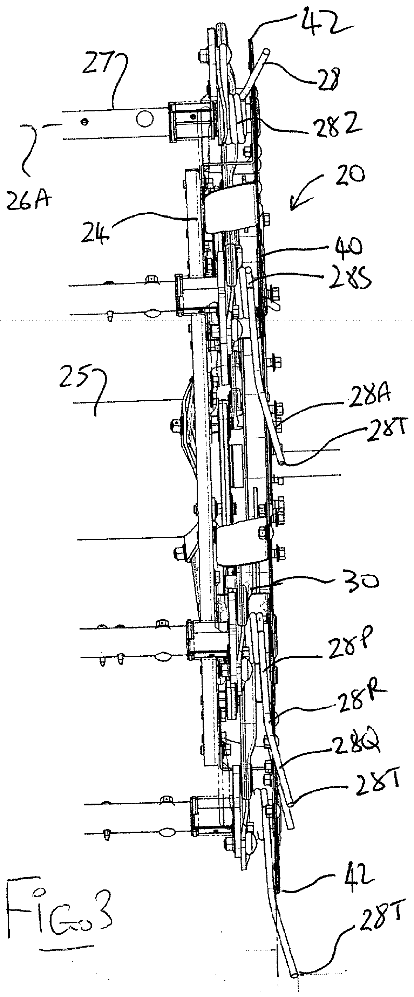

As best shown in Figure 3, of the endmost fingers 28A of the bats 27 have a base 28S at the bat which is connected to the bat 27 at a position axially inside the end shield plate 40. The bat tubes 27 terminate inside the end plate and may just touch the end plate but there is no connection thereto.

Each of the endmost fingers 28A is shaped to define an outer tip 28T which is axially spaced from the base 28S to a position at least axially aligned with the radial plane of the end shield plate 40, and as shown in Figure 3 is axially spaced from the base 28S on one side of the plate 40 to a position beyond the radial plane of the end shield plate 40.

As shown at 28R, each of the endmost fingers is bent in a direction longitudinally of the reel axis 26A so as to define a first portion 28P extending generally in radial plane and inside the plate 40 and a second portion 28Q beyond the bend 28R and extending to the tip 28T. In order to allow this bend to occur and be maintained, each of the endmost fingers is formed from a metal typically steel rod or wire. All of the fingers can be formed in this manner but typically the other fingers of the bats other than the endmost fingers are formed of plastics material and lie in a radial plane of the bat axis. Fingers of this type are well known.

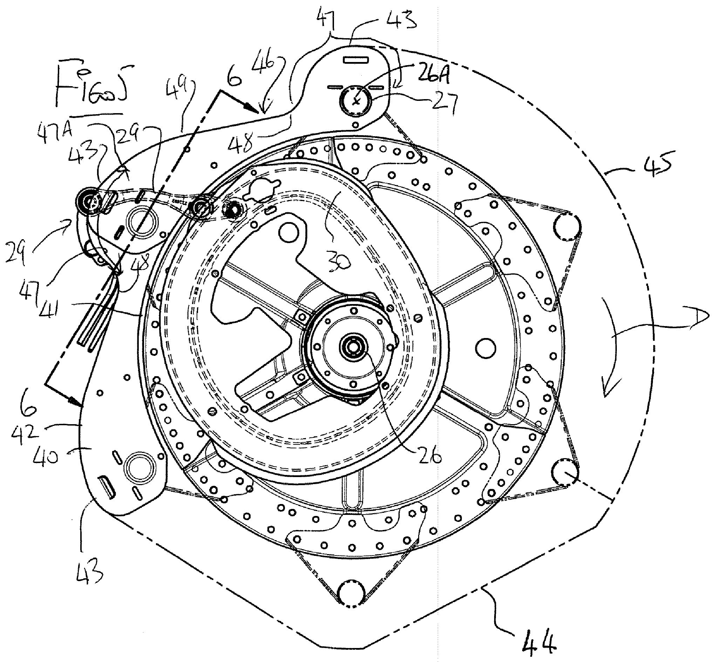

As shown best in Figure 5, the peripheral edge 42 of the end shield plate 40 has an apex 43 at each of the bats 27. The apex is smoothly curved around the axis 26A and is radially outwardly of the axis. Figure 5 also shows an imaginary line 44 which forms one example of a conventional hexagonal shape of an end plate and an imaginary line 45 which forms a circle surrounding the apexes. However in the present arrangement, the peripheral edge at each of the bats includes portions 46 which are recessed from the straight line 44 joining the apexes.

That is the end shield plate 40 has a portion 47 adjacent the apex 43 which is substantially part circular around the bat axis 26A. This allows rotation of the endmost finger 28A and particularly the portion 28Q around the bat axis without contacting the peripheral edge 42. The circular portion 47 terminates on the downstream side of each apes in relation to the direction of movement D in a deepest recess portion 48 which is most recessed from the imaginary circle 45. This is located at the point where the finger 28A moves most rearwardly around the axis 26A. From that deepest position 48, the peripheral edge 42 inclines smoothly and in a curve backwardly and upwardly in a portion 49 to the end point of the portion 47. Thus the peripheral edge of the end shield plate is recessed by a sharper angle in the portion 47 on the downstream side of the apex 43 than on the upstream side in the portion 47 of the apex 43 relative to the direction D of rotation of the reel. That is the peripheral edge is shaped so that a deepest recess 46 of the peripheral edge 42 is closer to an upstream apex 43 than a downstream apex to form a scalloped shape of the peripheral edge. The scalloped shape forms discontinuities in the peripheral edge of the end shield plate which engage the crop and help in causing the crop to move rearwardly with the reel much more than would a smooth circular edge as shown at 45 or even a hexagonal edge as shown at 44.

Thus the peripheral edge 42 of the end shield plate 40 has a portion 47 adjacent the apex which is substantially part circular around the bat axis 26A and remains substantially circular up to a position close to a deepest recess 46 of the peripheral edge.

The end shield plate lies immediately adjacent an end sheet (not shown) of the header lying in a vertical plane at right angles to the cutter bar so as to lie along the direction of working movement and adjacent the end shield plate.

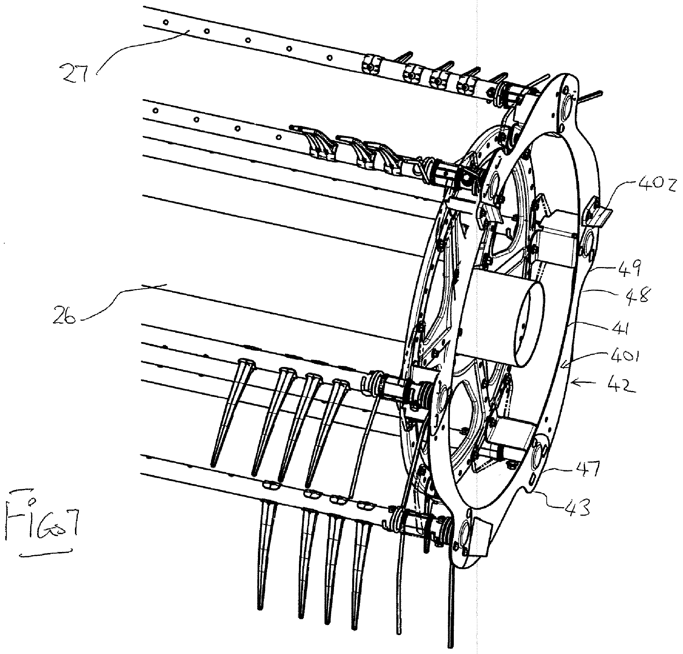

The opposite end is shown in Figure 7 where there is provided an end shield plate 401 of the same shape as that at the cam control end. In Figure 7 therefore there is no cam. Another optional feature shown is that both ends can include both the end finger and the next adjacent finger which are formed of metal so that they can be bent toward the end plane. Also the outer face of the end plate carries right angle blades 402 with a flange bolted to the end plate and a blade portion which projects axially from the end plate with the line along the blade extending radially. This blade acts to cooperate with the end sheet of the harvester to reduce the collection of crop material in that area.

## Claims

1. A crop harvesting header (10) comprising:
a header frame structure (11) arranged for movement in a direction of working movement across ground carrying a crop to be harvested;
a cutter bar (19) arranged across a forward edge of the header frame structure (11) for cutting the crop;
a cut crop transport arrangement (16) mounted on the header frame structure (11) for receiving and transporting the cut crop for further processing;
a reel (20) for Controlling movement of the crop in the area over the cutter bar (19); the reel (20) being mounted on the header frame structure (11) for movement therewith in the direction of movement and for rotation about a reel axis (26) generally parallel to the cutter bar (19); the reel (20) having a plurality of reel bats (27) at spaced positions around the reel axis (26), the reel bats (27) all lying on a common
bat circle around the reel axis (26) so that rotation of the reel (20) causes the reel bats (27) to follow a path of movement lying on the bat circle;
each of the reel bats (27) being pivotal by a drive linkage (29) about its respective bat axis (26A) parallel to the reel axis (26) so as to vary the angle of the bats (27) about the bat axis (26A) as the reel (20) rotates; each reel bat (27) having a row of bat fingers (28) projecting generally outwardly from the bat axis (26A) with the bat fingers (28) of the row being arranged at longitudinally spaced positions along
the bat axis (26A) and including an end most finger (28B) adjacent an end of the reel (20); an end shield plate (40) mounted on the reel (20) at the end of the reel (20) for rotation with the bats (27) around the reel axis (26) and lying generally in a radial plane of the axis of the reel (20); the end shield plate (40) having a peripheral edge (42) located radially inward of an outer tip
(28T) of the bat fingers (28);
each of the endmost fingers (28B) of the bats (27) having a base (28S) at the bat (27) which is axially inside the end shield plate (40);
and each of the endmost fingers (28B) is shaped to define an outer tip (28T) which is axially spaced from the base (28S) to a position at least axially aligned with the radial plane of the end shield plate (40); and **characterized by** the peripheral edge (42) of the end plate has an apex (43) at each of the bats (27) and the peripheral edge (42) at each of the bats (27) includes portions (46) which are recessed radially inwardly from the apex (43) from a Straight line joining the apexes to allow rotation of the endmost finger (28B) around the bat axis (26A) without contacting the peripheral edge (42) and wherein the peripheral edge (42) is shaped so that the recessed portion (46) is greater on a downstream side (48) of the apex (43) than on the upstream (49) side of the apex (43) relative to the direction of rotation of the reel (20).

2. The header (10) according to claim 1 wherein each of the endmost fingers (28B) is shaped to define an outer tip (28T) which is axially spaced from the base to a position beyond the radial plane of the end shield plate (40).

3. The header (10) according to any preceding claim wherein each of the endmost fingers (28B) is bent in a direction longitudinally of the axis (26).

4. The header (10) according to any preceding claim wherein each of the endmost fingers (28B) is formed from a metal rod or wire.

5. The header (10) according to any preceding claim wherein other fingers (28) of the bats other than the endmost fingers (28B) are formed of plastics material and lie in a radial plane of the bat axis (26A).

6. The header (10) according to any preceding claim wherein the peripheral edge (42) of the end shield plate (40) has a portion (47) adjacent the apex (43) which is substantially part circular around the bat axis (26A).

7. The header (10) according to claim 6 wherein the peripheral edge (42) is shaped so that a deepest recess of the peripheral edge is closer to an upstream apex (43) than a downstream apex (43) to form a scalloped shape.

8. The header (10) according to claim 7 wherein the scalloped shape forms discontinuities in the peripheral edge (42) of the end shield plate (40) which help in causing the crop to move rearwardly with the reel (20).

9. The header (10) according to any one of Claims 6 to 8 wherein the peripheral edge (42) of the end shield plate (40) has a portion adjacent the apex which is substantially part circular around the bat axis (26A) and remains substantially circular up to a position close to a deepest recess of the peripheral edge (42).

10. The header (10) according to any preceding claim wherein the drive linkage (29) comprises a cam member (30) mounted at one end of the reel (20), each bat (27) having associated therewith a
respective control link (29), such that, as the reel rotates through a series of angularly spaced positions
of the bats, the movement of the control link defined by the cam member causes said pivotal movement of the respective bat about the bat axis, and wherein the endmost finger (28B) has a base thereof which is located between the cam member (30) and the end shield plate (40).

## Patentansprüche

1. Ein Ernteschneidwerk (10), umfassend:
eine Schneidwerkrahmenstruktur (11), die zur Bewegung in einer Arbeitsbewegungsrichtung über einen Boden eingerichtet ist, auf dem sich zu erntendes Erntegut befindet;
einen Messerbalken (19), der entlang einer vorderen Kante der Schneidwerkrahmenstruktur (11) zum Schneiden des Ernteguts angeordnet ist;
eine Transportanordnung (16) für geschnittenes Erntegut, die an der Schneidwerkrahmenstruktur (11) zum Aufnehmen und Transportieren des geschnittenen Ernteguts zur weiteren Verarbeitung montiert ist;
eine Haspel (20) zum Steuern der Bewegung des Ernteguts in dem Bereich über dem Messerbalken (19); wobei die Haspel (20) an der Schneidwerkrahmenstruktur (11) montiert ist, um sich zusammen mit dieser in der Bewegungsrichtung zu bewegen und um eine im Allgemeinen parallel zu dem Messerbalken (19) verlaufende Haspelachse (26) zu rotieren; wobei die Haspel (20) eine Mehrzahl von Haspelleisten (27) an voneinander beabstandeten Positionen um die Haspelachse (26) aufweist, wobei die Haspelleisten (27) sämtlich auf einem gemeinsamen Haspelleistenkreis um die Haspelachse (26) liegen, sodass eine Rotation der Haspel (20) bewirkt, dass die Haspelleisten (27) einer auf dem Haspelleistenkreis liegenden Bewegungsbahn folgen;
wobei jede der Haspelleisten (27) mittels eines Antriebsgestänges (29) um ihre jeweilige, zu der Haspelachse (26) parallele Haspelleistenachse (26A) schwenkbar ist, um den Winkel der Haspelleisten (27) um die Haspelleistenachse (26A) während der Rotation der Haspel (20) zu verändern; wobei jede Haspelleiste (27) eine Reihe von Haspelfingern (28) aufweist, die von der Haspelleistenachse (26A) im Allgemeinen nach außen vorstehen, wobei die Haspelfinger (28) der Reihe an in Längsrichtung voneinander beabstandeten Positionen entlang der Haspelleistenachse (26A) angeordnet sind und einen äußersten Haspelfinger (28B) benachbart zu einem Ende der Haspel (20) umfassen;
ein Haspel-Seitenblech (40), das an der Haspel (20) an dem Ende der Haspel (20) zur Rotation mit den Haspelleisten (27) um die Haspelachse (26) montiert ist und im Allgemeinen in einer Radialebene der Achse der Haspel (20) liegt; wobei das Haspel-Seitenblech (40) eine Umfangskante (42) aufweist, die radial innerhalb einer äußeren Spitze (28T) der Haspelfinger (28) angeordnet ist;
wobei jeder der äußersten Haspelfinger (28B) der Haspelleisten (27) an der Haspelleiste (27) eine Basis (28S) aufweist, die axial auf der Innenseite des Haspel-Seitenblechs (40) liegt;
und wobei jeder der äußersten Haspelfinger (28B) so geformt ist, dass er eine äußere Spitze (28T) definiert, die von der Basis (28S) axial bis zu einer Position beabstandet ist, die zumindest axial mit der Radialebene des Haspel-Seitenblechs (40) fluchtet; und **dadurch gekennzeichnet, dass** die Umfangskante (42) des Haspel-Seitenblechs an jeder der Haspelleisten (27) einen Scheitelpunkt (43) aufweist und die Umfangskante (42) an jeder der Haspelleisten (27) Abschnitte (46) umfasst, die gegenüber einer die Scheitelpunkte verbindenden geraden Linie vom Scheitelpunkt (43) aus radial nach innen zurückgesetzt sind, um eine Rotation des äußersten Haspelfingers (28B) um die Haspelleistenachse (26A) zu ermöglichen, ohne die Umfangskante (42) zu berühren, und wobei die Umfangskante (42) so geformt ist, dass der zurückgesetzte Abschnitt (46) auf einer in Drehrichtung der Haspel (20) nachlaufenden Seite (48) des Scheitelpunkts (43) größer ist als auf der in Drehrichtung vorlaufenden Seite (49) des Scheitelpunkts (43).

2. Das Schneidwerk (10) nach Anspruch 1, wobei jeder der äußersten Haspelfinger (28B) so geformt ist, dass er eine äußere Spitze (28T) definiert, die von der Basis axial bis zu einer Position jenseits der Radialebene des Haspel-Seitenblechs (40) beabstandet ist.

3. Das Schneidwerk (10) nach einem der vorhergehenden Ansprüche, wobei jeder der äußersten Haspelfinger (28B) in einer Richtung längs der Achse (26) gebogen ist.

4. Das Schneidwerk (10) nach einem der vorhergehenden Ansprüche, wobei jeder der äußersten Haspelfinger (28B) aus einem Metallstab oder einem Metalldraht gebildet ist.

5. Das Schneidwerk (10) nach einem der vorhergehenden Ansprüche, wobei andere Haspelfinger (28) der Haspelleisten als die äußersten Haspelfinger (28B) aus Kunststoffmaterial gebildet sind und in einer Radialebene der Haspelleistenachse (26A) liegen.

6. Das Schneidwerk (10) nach einem der vorhergehenden Ansprüche, wobei die Umfangskante (42) des Haspel-Seitenblechs (40) einen an den Scheitelpunkt (43) angrenzenden Abschnitt (47) aufweist, der um die Haspelleistenachse (26A) im Wesentlichen kreisbogenförmig verläuft.

7. Das Schneidwerk (10) nach Anspruch 6, wobei die Umfangskante (42) so geformt ist, dass eine tiefste Ausnehmung der Umfangskante näher an einem in Drehrichtung vorlaufenden Scheitelpunkt (43) als an einem in Drehrichtung nachlaufenden Scheitelpunkt (43) liegt, um eine wellenförmige Form zu bilden.

8. Das Schneidwerk (10) nach Anspruch 7, wobei die wellenförmige Form Unstetigkeiten in der Umfangskante (42) des Haspel-Seitenblechs (40) bildet, die dazu beitragen, dass sich das Erntegut zusammen mit der Haspel (20) nach hinten bewegt.

9. Das Schneidwerk (10) nach einem der Ansprüche 6 bis 8, wobei die Umfangskante (42) des Haspel-Seitenblechs (40) einen an den Scheitelpunkt angrenzenden Abschnitt aufweist, der um die Haspelleistenachse (26A) im Wesentlichen kreisbogenförmig verläuft und bis zu einer Position nahe einer tiefsten Ausnehmung der Umfangskante (42) im Wesentlichen kreisbogenförmig bleibt.

10. Das Schneidwerk (10) nach einem der vorhergehenden Ansprüche, wobei das Antriebsgestänge (29) ein Kurvenelement (30) umfasst, das an einem Ende der Haspel (20) montiert ist, wobei jeder Haspelleiste (27) ein jeweiliger Steuerlenker (29) zugeordnet ist, sodass, wenn sich die Haspel dreht und die Haspelleisten eine Reihe von winkelmäßig voneinander beabstandeten Positionen durchlaufen, die durch das Kurvenelement vorgegebene Bewegung des Steuerlenkers die genannte Schwenkbewegung der jeweiligen Haspelleiste um die Haspelleistenachse bewirkt, und wobei der äußerste Haspelfinger (28B) eine Basis aufweist, die zwischen dem Kurvenelement (30) und dem Haspel-Seitenblech (40) angeordnet ist.

## Revendications

1. Une tête de récolte (10) comprenant :
une structure de châssis de la tête (11) agencée pour se déplacer dans une direction de déplacement de travail sur un sol portant une culture à récolter ;
une barre de coupe (19) disposée le long d'un bord avant de la structure de châssis de la tête (11) pour couper la culture ;
un dispositif de transport de la culture coupée (16) monté sur la structure de châssis de la tête (11) pour recevoir et transporter la culture coupée en vue d'un traitement ultérieur ;
un rabatteur (20) destiné à commander le déplacement de la culture dans la zone située au-dessus de la barre de coupe (19), le rabatteur (20) étant monté sur la structure de châssis de la tête (11) pour se déplacer avec celle-ci dans la direction de déplacement et pour tourner autour d'un axe de rabatteur (26) globalement parallèle à la barre de coupe (19), le rabatteur (20) comportant une pluralité de barres porte-doigts de rabatteur (27) à des positions espacées autour de l'axe du rabatteur (26), les barres porte-doigts de rabatteur (27) se trouvant toutes sur un cercle commun de barres porte-doigts autour de l'axe du rabatteur (26), de sorte que la rotation du rabatteur (20) amène les barres porte-doigts de rabatteur (27) à suivre une trajectoire de déplacement située sur le cercle des barres porte-doigts ;
chacune des barres porte-doigts de rabatteur (27) pouvant pivoter, au moyen d'une tringlerie d'entraînement (29), autour de son axe respectif de barre porte-doigts (26A), parallèle à l'axe du rabatteur (26), de manière à faire varier l'angle des barres porte-doigts (27) autour de l'axe de barre porte-doigts (26A) lors de la rotation du rabatteur (20), chaque barre porte-doigts de rabatteur (27) comportant une rangée de doigts de barre porte-doigts (28) faisant globalement saillie vers l'extérieur à partir de l'axe de barre porte-doigts (26A), les doigts de barre porte-doigts (28) de la rangée étant disposés à des positions espacées longitudinalement le long de l'axe de barre porte-doigts (26A) et comprenant un doigt d'extrémité (28B) adjacent à une extrémité du rabatteur (20) ;
un flasque d'extrémité (40) monté sur le rabatteur (20), à l'extrémité du rabatteur (20), pour tourner avec les barres porte-doigts (27) autour de l'axe du rabatteur (26) et s'étendant globalement dans un plan radial de l'axe du rabatteur (20), le flasque d'extrémité (40) présentant un bord périphérique (42) situé radialement vers l'intérieur par rapport à une pointe extérieure (28T) des doigts de barre porte-doigts (28) ;
chacun des doigts d'extrémité (28B) des barres porte-doigts (27) présentant, au niveau de la barre porte-doigts (27), une base (28S) qui est située axialement du côté intérieur du flasque d'extrémité (40) ;
et chacun des doigts d'extrémité (28B) étant conformé de manière à définir une pointe extérieure (28T) qui est espacée axialement de la base (28S) jusqu'à une position au moins axialement alignée avec le plan radial du flasque d'extrémité (40) ; et **caractérisée en ce que** le bord périphérique (42) du flasque d'extrémité présente un sommet (43) au niveau de chacune des barres porte-doigts (27), et le bord périphérique (42), au niveau de chacune des barres porte-doigts (27), comprend des parties (46) qui sont en retrait radialement vers l'intérieur à partir du sommet (43) par rapport à une ligne droite reliant les sommets, afin de permettre la rotation du doigt d'extrémité (28B) autour de l'axe de barre porte-doigts (26A) sans contact avec le bord périphérique (42), et dans laquelle le bord périphérique (42) est conformé de telle sorte que la partie en retrait (46) est plus importante sur un côté aval (48) du sommet (43) que sur le côté amont (49) du sommet (43), par rapport au sens de rotation du rabatteur (20).

2. La tête de récolte (10) selon la revendication 1, dans laquelle chacun des doigts d'extrémité (28B) est conformé de manière à définir une pointe extérieure (28T) qui est espacée axialement de la base jusqu'à une position située au-delà du plan radial du flasque d'extrémité (40).

3. La tête de récolte (10) selon l'une quelconque des revendications précédentes, dans laquelle chacun des doigts d'extrémité (28B) est courbé dans une direction longitudinale de l'axe (26).

4. La tête de récolte (10) selon l'une quelconque des revendications précédentes, dans laquelle chacun des doigts d'extrémité (28B) est formé à partir d'une tige ou d'un fil métallique.

5. La tête de récolte (10) selon l'une quelconque des revendications précédentes, dans laquelle les autres doigts (28) des barres porte-doigts, autres que les doigts d'extrémité (28B), sont formés en matière plastique et se trouvent dans un plan radial de l'axe de barre porte-doigts (26A).

6. La tête de récolte (10) selon l'une quelconque des revendications précédentes, dans laquelle le bord périphérique (42) du flasque d'extrémité (40) présente une partie (47), adjacente au sommet (43), qui est sensiblement en arc de cercle autour de l'axe de barre porte-doigts (26A).

7. La tête de récolte (10) selon la revendication 6, dans laquelle le bord périphérique (42) est conformé de telle sorte que le creux le plus profond du bord périphérique est plus proche d'un sommet amont (43) que d'un sommet aval (43), afin de former une forme festonnée.

8. La tête de récolte (10) selon la revendication 7, dans laquelle la forme festonnée forme des discontinuités dans le bord périphérique (42) du flasque d'extrémité (40), lesquelles contribuent à amener la culture à se déplacer vers l'arrière avec le rabatteur (20).

9. La tête de récolte (10) selon l'une quelconque des revendications 6 à 8, dans laquelle le bord périphérique (42) du flasque d'extrémité (40) présente une partie adjacente au sommet qui est sensiblement en arc de cercle autour de l'axe de barre porte-doigts (26A) et reste sensiblement circulaire jusqu'à une position proche du creux le plus profond du bord périphérique (42).

10. La tête de récolte (10) selon l'une quelconque des revendications précédentes, dans laquelle la tringlerie d'entraînement (29) comprend un élément de came (30) monté à une extrémité du rabatteur (20), chaque barre porte-doigts (27) ayant une biellette de commande respective (29) qui lui est associée, de telle sorte que, lorsque le rabatteur tourne successivement à travers une série de positions des barres porte-doigts espacées angulairement, le mouvement de la biellette de commande défini par l'élément de came provoque ledit mouvement de pivotement de la barre porte-doigts respective autour de l'axe de barre porte-doigts, et dans laquelle le doigt d'extrémité (28B) possède une base qui est située entre l'élément de came (30) et le flasque d'extrémité (40).
